# FASCICULE DE BREVET EUROPEEN

(11) **EP 3 394 481 B1**
(45) Date de publication et mention de la délivrance du brevet: **09.04.2025**
(21) Numéro de dépôt: 16809988.5
(22) Date de dépôt: 14.11.2016
(51) Int. Cl.: F16H 63/34, F16H 57/00

(54) **PIÈCE D'IMMOBILISATION PROVISOIRE DU LEVIER DE COMMANDE D'UNE BOITE DE VITESSES**
TEIL ZUR PROVISORISCHEN FIXIERUNG DES SCHALTHEBELS EINES SCHALTGETRIEBES
TEMPORARY LOCKING DEVICE FOR GEARBOX CONTROL LEVER

(30) Priorité: 22.12.2015 FR 1563045
(43) Date de publication de la demande: 31.10.2018
(73) Titulaire: Stellantis Auto SAS, 78300 Poissy (FR)
(72) Inventeur: IMBAULT, Pierre, 78990 Elancourt (FR); IACOBOSCHI, Ionut, 75020 Paris 20 (FR)
(74) Mandataire: PSIP
(86) Numéro de dépôt international: PCT/FR2016/052944
(87) Numéro de publication internationale: WO 2017/109306

(56) Documents cités:
- EP-A1- 1 972 834
- EP-A1- 2 131 078
- DE-A1- 102007 011 034

## Description

La présente invention concerne une pièce destinée à l'immobilisation provisoire à un rapport sélectionné d'un levier de commande monté dans le carter d'une boîte de vitesse et une telle boîte de vitesses mécanique pour un véhicule, notamment automobile.

Une telle boîte de vitesses comporte de façon connue en soi un carter ou boîtier dans lequel est monté coulissant un levier de commande permettant la sélection, l'engagement et le dégagement de vitesses de la boîte de vitesses, lequel levier de commande est relié par des câbles ou des tringles de commande à un levier de changement de vitesses à pommeau situé dans l'habitacle du véhicule.

Le raccordement de ces deux leviers par les câbles ou les tringles de commande nécessite un réglage de synchronisation de commande du fait que le levier de commande de la boîte de vitesses doit être correctement positionné à un rapport sélectionné, par exemple le second rapport, quand le levier de changement de vitesses dans l'habitacle est également dans un couloir de sélection de sa grille de commande correspondant à ce rapport.

A cet effet, il est possible de manipuler le levier de commande de la boîte de vitesses avant raccordement avec le levier de changement de vitesses dans l'habitacle du véhicule, mais ce processus peut engendrer un déplacement du levier de commande à un rapport non souhaité lors de son raccordement avec le levier de changement de vitesses, auquel cas le levier de commande n'est pas correctement positionné lors de ce raccordement avec le levier de changement de vitesses dans l'habitacle.

Le document EP 0 983 893 divulgue un dispositif d'immobilisation pour le transport et le réglage d'un levier ou sélecteur de vitesses faisant partie d'un groupe ou ensemble devant être monté dans le sous-capot du véhicule.

Ce dispositif d'immobilisation comprend une pièce en matière plastique pouvant être placée sur le groupe du levier ou sélecteur de vitesses pour immobiliser et bloquer ce dernier relativement au groupe.

Ainsi, ce dispositif vise à immobiliser le levier de changement de vitesses dans le sous-capot du véhicule et, par ailleurs, il concerne une boîte de vitesses automatique.

En outre, la pièce en matière plastique d'immobilisation du levier ou sélecteur de vitesses est d'une structure relativement complexe.

Le document DE 10 2007 011034 divulgue un dispositif de verrouillage d'un levier pivotant d'une boîte de vitesses. Le dispositif de verrouillage est monté sur un axe pivot parallèle à l'axe du levier.

La présente invention a pour but de remédier aux inconvénients de l'art antérieur.

A cet effet, l'invention a pour objet une pièce destinée à l'immobilisation provisoire à un rapport sélectionné d'un levier de commande monté dans le carter d'une boîte de vitesses, comprenant au moins :
- une partie destinée au positionnement de la pièce d'immobilisation relativement à une oreille solidaire du carter de boîte de vitesses et au verrouillage de la pièce d'immobilisation à cette oreille, cette partie comprenant un cadre délimitant une ouverture destinée au passage de l'oreille et comprenant deux branches sensiblement parallèles dont l'une comporte un bossage de verrouillage destiné à être engagé dans un orifice de l'oreille, la branche comportant le bossage de verrouillage pouvant être écartée élastiquement de l'autre branche, et
- une partie destinée à immobiliser le levier de commande au rapport sélectionné et comprenant un bras solidaire du cadre de la partie de positionnement et de verrouillage en prolongement du cadre et dont l'extrémité libre est conformée et destinée à immobiliser le levier de commande au rapport sélectionné de la boîte de vitesses, et
- une troisième partie constituée par une poignée de manoeuvre solidaire du cadre de la partie de positionnement et de verrouillage à l'opposé de la partie d'immobilisation de cette pièce, laquelle poignée de manoeuvre comprend deux branches formant pince permettant, par rapprochement l'une de l'autre, d'écarter élastiquement la branche à bossage de verrouillage de l'autre branche du cadre de la partie de positionnement et de verrouillage de la pièce d'immobilisation pour désengager le bossage de verrouillage de l'orifice de l'oreille et retirer la pièce d'immobilisation du carter de la boîte de vitesses.

Avantageusement, l'extrémité libre du bras d'immobilisation est recourbée à angle droit.

De préférence, la pièce d'immobilisation est monobloc et réalisée en une matière plastique.
l'invention a en outre pour objet une boîte de vitesses pour un véhicule comprenant un carter de boîte de vitesses, un levier de commande monté dans le carter de la boîte de vitesses, et une oreille solidaire du carter, cette oreille présentant un orifice, cette boîte de vitesses comprenant en outre une pièce d'immobilisation provisoire telle que précédemment décrite.

Avantageusement, l'extrémité libre du bras d'immobilisation est recourbée à angle droit et le levier de commande comporte une extrémité coudée maintenue en appui sur la face interne de l'extrémité recourbée à angle droit du bras d'immobilisation.

De préférence, la pièce d'immobilisation est monobloc et est réalisée en une matière plastique.

De préférence, la boîte de vitesses est du type mécanique.

De préférence, le levier de commande est monté coulissant dans le carter.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :

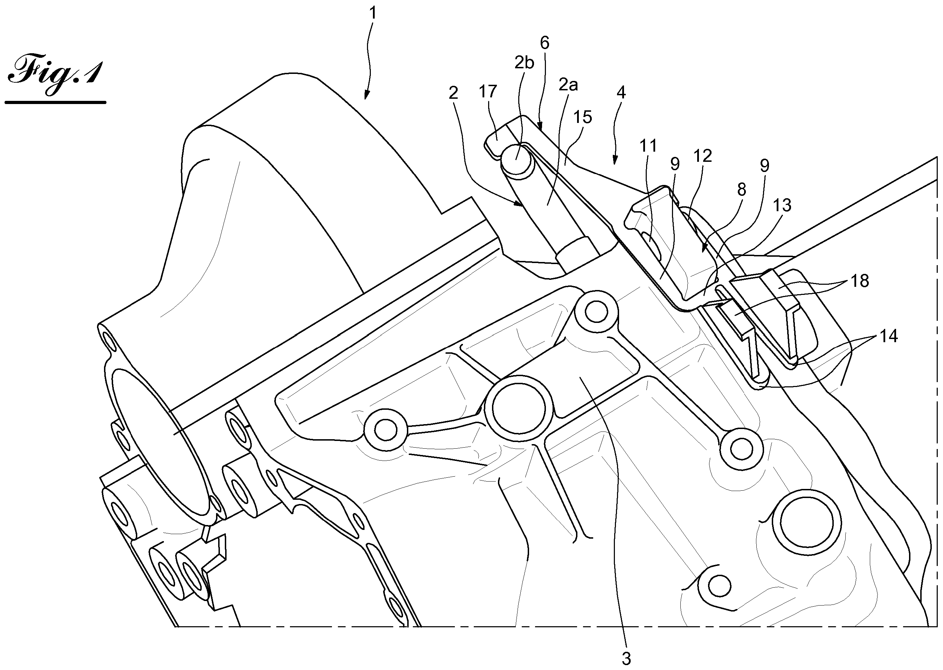

- La figure 1 est une vue partielle en perspective de dessus d'une boîte de vitesses pour un véhicule automobile et comprenant la pièce d'immobilisation conforme à l'invention ;
- la figure 2 est une vue en perspective de la pièce d'immobilisation destinée à immobiliser le levier de commande de la boîte de vitesses de la figure 1 ;
- la figure 3 est une vue partielle en perspective de côté de la boîte de vitesses montrant l'étape d"implantation de la pièce d'immobilisation à une oreille du carter de la boîte de vitesses ;
- la figure 4 est une vue de dessus de la pièce d'immobilisation suivant la flèche IV de la figure 3 ; et
- la figure 5 est une vue en perspective semblable à celle de la figure 3 et montrant la pièce d'immobilisation amoviblement fixée à l'oreille du carter de la boîte de vitesses pour immobiliser la commande de cette dernière.

En se reportant aux figures, la référence 1 désigne une boîte de vitesses, partiellement représentée, pour un véhicule, notamment automobile. De préférence, la boîte de vitesses est du type mécanique.

La boîte de vitesses 1 comprend un levier de commande 2 monté coulissant dans le carter ou boîtier 3 de la boîte de vitesses 1 et permettant la sélection, l'engagement et le dégagement de vitesses.

Le levier de commande 2 est prévu pour être commandé par un levier de changement de vitesses à pommeau, non représenté, situé dans l'habitacle du véhicule.

Le levier de commande 2 et le levier de changement de vitesses sont reliés entre eux par des câbles ou des tringles de commande, non représentés, et qui nécessitent un réglage de synchronisation de commande, du fait qu'il faut que le levier de commande 2 soit correctement positionné en sélection d'un rapport de vitesses tel que le second rapport, quand le levier de changement de vitesses dans l'habitacle est également dans le couloir de sélection correspondant de sa grille de commande.

A cet effet, selon l'invention, la boîte de vitesses 1 comprend une pièce 4 amoviblement fixée à une partie du carter 3 de la boîte de vitesses 1 et permettant d'immobiliser provisoirement le levier de commande 2 à un rapport sélectionné, par exemple le second rapport, de la boîte de vitesses.

La pièce d'immobilisation 4 comprend trois parties distinctes respectivement une partie de manoeuvre 5, une partie d'immobilisation 6 permettant d'immobiliser le levier de commande 2 dans la position voulue et une partie centrale de positionnement et de verrouillage 7 située entre les parties de manoeuvre 5 et d'immobilisation 6.

La partie centrale de positionnement et de verrouillage 7 se présente sous la forme d'un cadre généralement rectangulaire délimitant une ouverture destinée au passage d'une oreille 8 solidaire du carter 3 de la boîte de vitesses 1 coopérant avec la partie centrale 7 de la pièce d'immobilisation 4 pour positionner la partie d'immobilisation 6 de la pièce 4 relativement au carter 3 à une position relative permettant au levier de commande 2 d'être maintenu en position au rapport sélectionné, tel que le second rapport de la boîte de vitesses 1.

Le cadre de la partie de positionnement et de verrouillage 7 comprend notamment deux branches sensiblement parallèles 9, dont l'une comporte un bossage de verrouillage 10 pouvant être amoviblement engagé dans un orifice 11 de l'oreille 8 lorsque cette dernière est introduite au travers de l'ouverture du cadre de la partie de positionnement et de verrouillage 7. L'orifice 11 peut être constitué par un perçage traversant l'oreille 8.

Le bossage de verrouillage 10 est solidaire de la face interne d'une protubérance 12 de la branche correspondante 9 au-dessus de celle-ci, le bossage de verrouillage 10 étant tourné vers l'autre branche 9 du cadre de la partie de positionnement et de verrouillage 7.

Comme représenté, le bossage de verrouillage 10 est en forme de croisillon, mais il peut revêtir toute autre forme, telle que par exemple une forme hémisphérique.

La protubérance 12 comportant le bossage de verrouillage 10 est solidaire d'une extrémité libre de la branche correspondante 9 qui est ainsi flexible.

La partie de manoeuvre 5 de la pièce d'immobilisation 4 est constituée par une poignée solidaire d'une branche 13 du cadre de la partie de positionnement et de verrouillage 7 et perpendiculaire aux deux branches 9.

La poignée de manoeuvre 5 comprend deux branches 14 formant pince permettant, par rapprochement l'une de l'autre, d'écarter élastiquement la branche flexible 9 à bossage de verrouillage 10 de l'autre branche 9 du cadre de la partie de positionnement et de verrouillage 7 de la pièce d'immobilisation 4.

La partie de la branche 13 du cadre de la partie de positionnement et de verrouillage 7 située entre les deux branches 14 de la poignée de manoeuvre 5 est amincie et sert de pivotement de l'une des branches 14 par rapport à l'autre pour provoquer l'écartement élastique de la branche flexible 9 portant le bossage de verrouillage 10 de l'autre branche 9 de ce cadre.

La partie d'immobilisation 6 de la pièce 4 comprend un bras rigide 15 solidaire de la branche 16 du cadre de la partie de positionnement et de verrouillage 7 et située à l'opposé de la branche parallèle 13 de laquelle fait saillie la poignée de manœuvre 5.

L'extrémité libre 17 du bras 15 est conformée pour immobiliser le levier de commande 2 au rapport sélectionné, par exemple le second rapport, de la boîte de vitesses 1. Comme représenté, l'extrémité libre 17 du bras d'immobilisation 15 est recourbée à angle droit relativement à la direction longitudinale de ce bras.

Le levier de commande 2 comprend un axe cylindrique 2a se terminant par une partie d'extrémité 2b coudée à angle droit relativement à l'axe 2a.

La pièce d'immobilisation 4 présente une configuration généralement plane, c'est-à-dire que ses trois parties de manœuvre 5, d'immobilisation 6 et de positionnement et de verrouillage 7 sont situées dans un même plan. De préférence, la pièce d'immobilisation 4 est monobloc et est réalisée en une matière plastique, par exemple à base de résine synthétique.

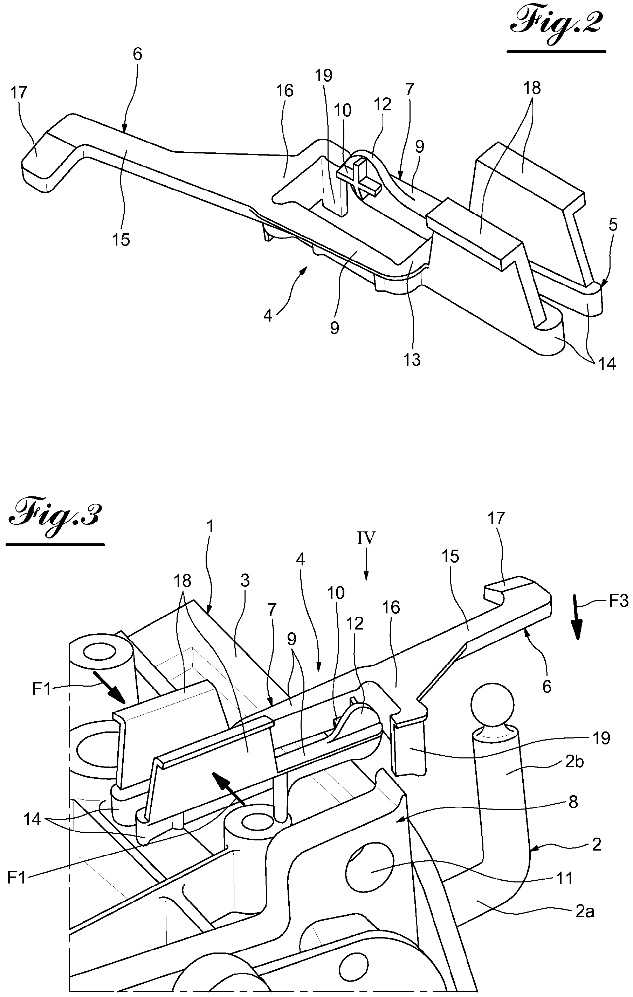

Comme représenté aux figures 3 à 5, les deux branches 14 de la poignée de manœuvre 5 peuvent être pourvues respectivement de deux ailettes 18 faisant saillies d'un même côté des poignées 14 pour faciliter la préhension de ces dernières. Les deux ailettes 18 peuvent être réalisées de manière monobloc avec la pièce d'immobilisation 4.

Au besoin, la pièce d'immobilisation 4 peut également être pourvue de deux pieds de positionnement 19, dont un seul est clairement visible, faisant saillie de la partie de liaison du bras d'immobilisation 15 au cadre de la partie de positionnement et de verrouillage 7 suivant une direction perpendiculaire au bras d'immobilisation 15 et conformés pour venir en appui respectivement sur deux coins parallèles d'extrémités de l'oreille 8. La présence de ces deux pieds 19 permet de faciliter le positionnement de la pièce d'immobilisation 4 relativement à l'oreille 8.

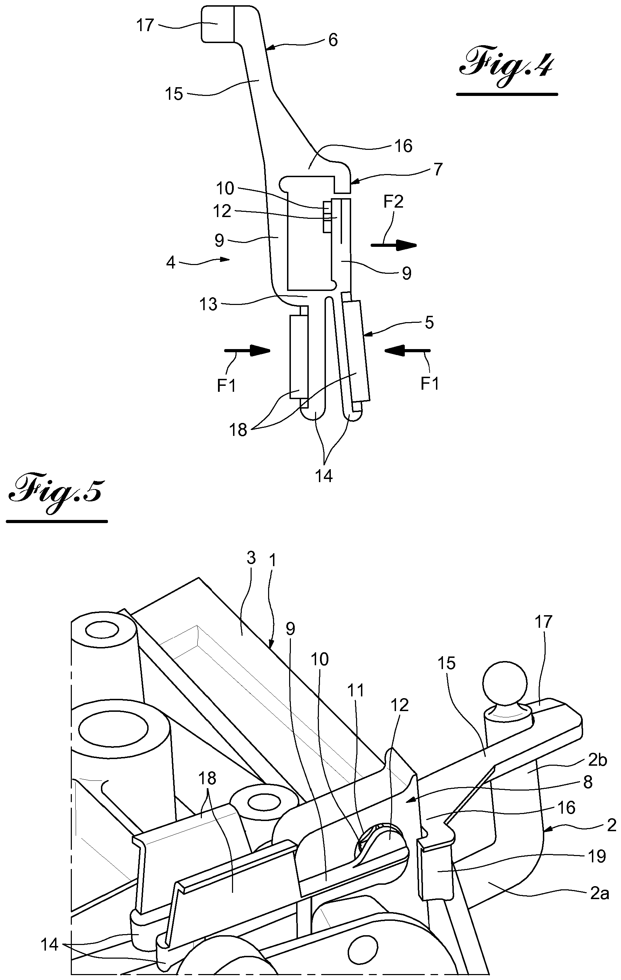

Comme représenté aux figures 3 et 4, la mise en place de la pièce d'immobilisation 4 sur le carter 3 de la boîte de vitesses 1 s'effectue en rapprochant élastiquement l'une de l'autre les deux branches 14 de la poignée de manœuvre 5 à l'aide des deux ailettes 18 comme symbolisé par les flèches F1 à ces figures pour provoquer l'écartement élastique de la branche flexible 9 portant le bossage de verrouillage 10 relativement à l'autre branche 9 comme symbolisé par la flèche F2 en figure 4 puis la pièce d'immobilisation 4 est rapprochée du carter 3 au-dessus de l'oreille 8 comme symbolisé par la flèche F3 pour engager cette dernière dans l'ouverture du cadre de la partie de positionnement et de verrouillage 7 jusqu'à ce que le bossage de verrouillage 10 se trouve en regard de l'orifice 11 de l'oreille 8, lequel bossage est alors engagé dans cet orifice en relâchant les deux poignées 14 qui s'écartent élastiquement l'une de l'autre avec retour concomitant de la branche flexible 9 à sa position de repos, verrouillant ainsi la pièce d'immobilisation 4 à l'oreille 8. Cette dernière est ainsi disposée entre les deux branches sensiblement parallèles 9.

Le levier de commande 2 est alors déplacé jusqu'à ce que son extrémité coudée 2b vienne en appui sur la face interne de l'extrémité coudée 17 du bras d'immobilisation 15, dont la longueur sera déterminée de manière par cette position d'immobilisation du levier de commande relativement à ce bras ce levier occupe le rapport sélectionné, tel que par exemple le second rapport de la boîte de vitesses.

Ainsi, la pièce d'immobilisation 4 immobilise le levier de commande 2 de la boîte de vitesses 1 dans un rapport donné de vitesse.

Il est à noter que les deux pieds 19, qui se trouvent en appui respectivement dans les deux coins correspondant de l'oreille 8 en position de fixation de la pièce d'immobilisation 4 au carter 3 de la boîte de vitesses 1, participent à la précision de positionnement de la pièce 4 relativement à l'oreille 8 et, par conséquent, à la précision d'immobilisation du levier de commande 2 relativement au carter 3 au rapport donné de vitesse de la boîte de vitesses 1.

Pour désengager la pièce d'immobilisation 4 du carter 3 de la boîte de vitesses 1 une fois que le levier de commande 2 a été correctement raccordé au levier de changement de vitesses dans l'habitacle du véhicule par l'intermédiaire des câbles ou des tringles de commande, il suffit de saisir les deux branches 14 de la poignée de manoeuvre 5 à l'aide des ailettes 18 pour rapprocher élastiquement l'une de l'autre ces deux branches et provoquer l'écartement élastique de la branche flexible 9 relativement à l'oreille 8 afin de désengager le bossage de verrouillage 10 de l'orifice 11 de l'oreille 8 puis la pièce d'immobilisation 4 est déplacée d'au dessus de l'oreille 8 pour la retirer de cette dernière.

Il est à noter que l'opération d'immobilisation du levier de commande 2 au rapport sélectionné de vitesse peut s'effectuer en déplaçant ce levier relativement au carter de la boîte de vitesses 1 à ce rapport puis en fixant amoviblement la pièce d'immobilisation 4 à l'oreille 8 de manière que l'extrémité coudée 17 du bras d'immobilisation 15 vienne en appui glissant sur l'extrémité coudée 2b de ce levier lors de cette fixation.

La pièce d'immobilisation 4 est mise en place sur le carter de la boîte de vitesses en fin d'assemblage de cette dernière et doit rester en place jusqu'à ce que la commande externe constituée par le levier de changement de vitesse dans l'habitacle du véhicule soit raccordé au levier de commande de cette boîte de vitesses. Une fois ce raccordement effectué, la pièce d'immobilisation 4 est retirée du carter de la boîte de vitesses 1 et, en tout cas, avant l'utilisation du véhicule.

En principe, la pièce d'immobilisation 4 est jetée après utilisation, mais elle peut être réutilisée lors des interventions après vente sur la boîte de vitesses nécessitant un démontage des câbles ou des tringles de commande reliant le levier de commande de la boîte de vitesses et le levier de changement de vitesse dans l'habitacle du véhicule.

L'invention telle que décrite ci-dessus garantit le bon positionnement du levier de commande de la boîte de vitesses dès la fin de fabrication de cette dernière en usine mécanique, jusqu'au raccordement avec la commande du véhicule en usine terminale. Elle supprime tout risque erreur de réglage de synchronisation de commande entre le levier de commande de la boîte de vitesses et le levier de changement de vitesse dans l'habitacle du véhicule et limite les réglages de la commande globale boîte de vitesses et véhicule, d'où un gain de temps et de précision de montage.

Selon un exemple en dehors de l'invention, la pièce d'immobilisation 4 peut ne pas comporter de partie de manoeuvre 5. Dans ce cas, la pièce d'immobilisation 4 sera amoviblement fixée à l'oreille 8 du carter 3 de la boîte de vitesses 1 en positionnant le cadre de la partie de positionnement et de verrouillage 7 au-dessus de l'oreille 8 puis en exerçant manuellement un appui sur les deux branches 9 jusqu'à ce que le bossage de verrouillage 10 s'engage élastiquement dans l'orifice 11 de l'oreille 8 par la branche flexible 9. Pour retirer la pièce d'immobilisation 4 de l'oreille 8, un outil, tel qu'un tournevis, sera introduit sous le cadre de la partie de positionnement de verrouillage en exerçant un effort vers le haut relativement au carter 3 de la boîte de vitesses 1 pour désengager élastiquement le bossage de verrouillage 10 de l'orifice 11 de l'oreille 8. Un tel désengagement peut être facilité en réalisant le bossage de verrouillage 10 suivant une forme hémisphérique. Selon une autre variante, la protubérance 12 portant le bossage 10 de forme hémisphérique pourrait être flexible relativement à sa branche de support 9 qui serait rigide pour engager élastiquement le bossage 10 dans l'orifice 11 de l'oreille 8 ou le désengager élastiquement de cet orifice à l'aide de l'outil.

## Revendications

1. Pièce (4) destinée à l'immobilisation provisoire à un rapport sélectionné d'un levier de commande (2) monté dans le carter (3) d'une boîte de vitesses (1), comprenant au moins :
- une partie (7) destinée au positionnement de la pièce d'immobilisation (4) relativement à une oreille (8) solidaire du carter (3) de la boîte de vitesses (1) et au verrouillage de la pièce d'immobilisation (4) à cette oreille, cette partie (7) comprenant un cadre délimitant une ouverture destinée au passage de l'oreille (8) et comprenant deux branches (9) sensiblement parallèles dont l'une comporte un bossage de verrouillage (10) destiné à être engagé dans un orifice (11) de l'oreille (8), la branche (9) comportant le bossage de verrouillage (10) pouvant être écartée élastiquement de l'autre branche (9), et
- une partie (6) destinée à immobiliser le levier de commande (2) au rapport sélectionné et comprenant un bras (15) solidaire du cadre de la partie (7) de positionnement et de verrouillage en prolongement du cadre et dont l'extrémité libre (17) est conformable et destinée à immobiliser le levier de commande (2) au rapport sélectionné de la boîte de vitesses (1), **caractérisée en ce qu'**elle comprend une troisième partie (5) constituée par une poignée de manoeuvre solidaire du cadre de la partie (7) de positionnement et de verrouillage à l'opposé de la partie (6) d'immobilisation de cette pièce, laquelle poignée de manoeuvre (5) comprend deux branches (14) formant pince permettant, par rapprochement l'une de l'autre, d'écarter élastiquement la branche (9) à bossage de verrouillage (10) de l'autre branche (9) du cadre de la partie (7) de positionnement et de verrouillage de la pièce d'immobilisation (4) pour désengager le bossage de verrouillage (10) de l'orifice (11) de l'oreille (8) et pour retirer la pièce d'immobilisation (4) du carter (3) de la boîte de vitesses (1).

2. Pièce d'immobilisation selon la revendication 1, **caractérisée en ce que** l'extrémité libre (17) du bras d'immobilisation (15) est recourbée à angle droit.

3. Pièce d'immobilisation selon l'une des revendications précédentes, **caractérisée en ce qu'**elle est monobloc et réalisée en une matière plastique.

4. Boîte de vitesses (1) pour un véhicule comprenant un carter (3) de boîte de vitesses (1), un levier de commande (2) monté dans le carter (3) de la boîte de vitesses (1), et une oreille (8) solidaire du carter (3), cette oreille (8) présentant un orifice (11), **caractérisée en ce qu'**elle comprend une pièce (4) d'immobilisation provisoire selon l'une des revendications précédentes.

5. Boîte de vitesses selon la revendication 4, **caractérisée en ce que** l'extrémité libre (17) du bras d'immobilisation (15) est recourbée à angle droit et le levier de commande (2) comporte une extrémité coudée (2b) maintenue en appui sur la face interne de l'extrémité recourbée à angle droit (17) du bras d'immobilisation (15).

6. Boîte de vitesses selon l'une des revendications 4 et 5, **caractérisée en ce que** la pièce d'immobilisation (4) est monobloc et réalisée en une matière plastique.

7. Boîte de vitesses selon l'une des revendications 4 à 6, **caractérisée en ce qu'**elle est du type mécanique.

8. Boîte de vitesses selon l'une des revendications 4 à 7, **caractérisée en ce que** le levier de commande (2) est monté coulissant dans le carter (3).

## Patentansprüche

1. Teil (4) ist für die vorübergehende Immobilisierung bei einem ausgewählten Übersetzungsverhältnis eines Hebels vorgesehen Steuerung (2), montiert im Gehäuse (3) eines Getriebes (1), umfassend mindestens:
- ein Teil (7), das dazu bestimmt ist, das Fixierungsteil (4) relativ dazu zu positionieren eine am Gehäuse (3) des Getriebes (1) befestigte Lasche (8) und zur Verriegelung des Feststellteils (4) an dieser Lasche, wobei dieser Teil (7) einen Rahmen umfasst, der eine für den Durchgang des Getriebes (1) bestimmte Öffnung begrenzt Ohr (8) und umfasst zwei im Wesentlichen parallele Zweige (9), von denen einer einen Verriegelungsvorsprung (10) umfasst in eine Öffnung (11) des Ohrs (8) eingreift, wobei der Zweig (9), der den Verriegelungsvorsprung (10) aufweist, elastisch vom anderen Zweig (9) beabstandet werden kann, und
- ein Teil (6), das dazu bestimmt ist, den Steuerhebel (2) im gewählten Gang zu fixieren, und einen Arm (15) umfasst, der als Verlängerung des Rahmens am Rahmen des Positionierungs- und Verriegelungsteils (7) befestigt ist und dessen freies Ende ( 17) ist anpassungsfähig und dient dazu, den Steuerhebel (2) im gewählten Getriebegang zu blockieren Getriebe (1), **dadurch gekennzeichnet, dass** es einen dritten Teil (5) umfasst, der aus einem Betätigungsgriff besteht, der am Rahmen des Positionierungs- und Verriegelungsteils (7) gegenüber dem Feststellteil (6) dieses Teils befestigt ist, wobei der Betätigungsgriff ( 5) umfasst zwei Schenkel (14), die eine Klemme bilden und es ermöglichen, durch Annäherung aneinander den Schenkel (9) mit dem Verriegelungsvorsprung (10) elastisch vom anderen Schenkel (9) des Rahmens des Teils (7) zu trennen, ihn zu positionieren und zu verriegeln Feststellteil (4), um den Verriegelungsvorsprung (10) von der Öffnung (11) des Ohrs (8) zu lösen und das Feststellteil (4) vom Gehäuse (3) zu entfernen. des Getriebes (1).

2. Immobilisierungsteil nach Anspruch 1, **dadurch gekennzeichnet, dass** das Ende Frei (17) des Immobilisierungsarms (15) ist rechtwinklig gebogen.

3. Wegfahrsperrenteil nach einem der vorhergehenden Ansprüche, **dadurch gekennzeichnet, dass** es einstückig und aus einem Kunststoffmaterial gefertigt ist.

4. Getriebe (1) für ein Fahrzeug mit einem Getriebegehäuse (3) Zahnräder (1), einen Steuerhebel (2), der im Gehäuse (3) des Getriebes (1) montiert ist, und ein am Gehäuse (3) befestigtes Ohr (8), wobei dieses Ohr (8) eine Öffnung (11) aufweist. ,
**dadurch gekennzeichnet, dass** es ein temporäres Immobilisierungsteil (4) nach einem der vorhergehenden Ansprüche umfasst.

5. Getriebe nach Anspruch 4, **dadurch gekennzeichnet, dass** das freie Ende (17) des Feststellarms (15) rechtwinklig gebogen ist und der Steuerhebel (2) weist ein gebogenes Ende (2b) auf, das auf der Innenseite des im rechten Winkel gebogenen Endes (17) des Feststellarms (15) gehalten wird.

6. Getriebe nach einem der Ansprüche 4 und 5, **dadurch gekennzeichnet, dass** das Feststellteil (4) einteilig und aus einem Kunststoffmaterial gefertigt ist.

7. Getriebe nach einem der Ansprüche 4 bis 6, **dadurch gekennzeichnet, dass** es ist vom mechanischen Typ.

8. Getriebe nach einem der Ansprüche 4 bis 7, **dadurch gekennzeichnet, dass** der Steuerhebel (2) im Gehäuse (3) verschiebbar gelagert ist.

## Claims

1. Part (4) intended for temporary immobilization at a selected ratio of a lever control unit (2) mounted in the housing (3) of a gearbox (1), comprising at least:
- a part (7) intended for positioning the immobilizing part (4) relative to an ear (8) secured to the casing (3) of the gearbox (1) and to the locking of the immobilizing part (4) to this ear, this part (7) comprising a frame delimiting an opening intended for the passage of the ear (8) and comprising two substantially parallel branches (9), one of which comprises a locking boss (10) intended to be engaged in an orifice (11) of the ear (8), the branch (9) comprising the locking boss (10) being able to be elastically separated from the other branch (9), and
- a part (6) intended to immobilize the control lever (2) at the selected gear and comprising an arm (15) integral with the frame of the positioning and locking part (7) extending from the frame and the free end (17) of which is conformable and intended to immobilize the control lever (2) at the selected gear of the gearbox. speeds (1), **characterized in that** it comprises a third part (5) consisting of an operating handle integral with the frame of the positioning and locking part (7) opposite the immobilizing part (6) of this part, which operating handle (5)
comprises two branches (14) forming a clamp allowing, by bringing one closer to the other, to elastically separate the branch (9) with locking boss (10) from the other branch (9) of the frame of the part (7) for positioning and locking the immobilizing part (4) to disengage the locking boss (10) from the orifice (11) of the ear (8) and to remove the immobilizing part (4) from the casing (3) of the gearbox (1).

2. Immobilization part according to claim 1, **characterized in that** the end free arm (17) of the immobilizing arm (15) is curved at a right angle.

3. Immobilization part according to one of the preceding claims, **characterized in that** it is a single piece and made of a plastic material.

4. Gearbox (1) for a vehicle comprising a gearbox housing (3) gears (1), a control lever (2) mounted in the housing (3) of the gearbox (1), and an ear (8) secured to the housing (3), this ear (8) having an orifice (11), **characterized in that** it comprises a temporary immobilization part (4) according to one of the preceding claims.

5. Gearbox according to claim 4, **characterized in that** the free end (17) of the immobilizing arm (15) is curved at a right angle and the control lever (2) has a bent end (2b) held in abutment on the internal face of the right-angled curved end (17) of the immobilizing arm (15).

6. Gearbox according to one of claims 4 and 5, **characterized in that** the immobilizing part (4) is in one piece and made of a plastic material.

7. Gearbox according to one of claims 4 to 6, **characterized in that** it is of the mechanical type.

8. Gearbox according to one of claims 4 to 7, **characterized in that** the control lever (2) is slidably mounted in the housing (3).
